# FASCICULE DE BREVET EUROPEEN

(11) **EP 2 720 890 B1**
(45) Date de publication et mention de la délivrance du brevet: **15.01.2020**
(21) Numéro de dépôt: 12721410.4
(22) Date de dépôt: 25.04.2012
(51) Int. Cl.: B60H 1/00

(54) **CIRCUIT DE FLUIDE REFRIGERANT ET PROCEDE DE CONTROLE D'UN TEL CIRCUIT**
KÄLTEMITTELKREISLAUF UND VERFAHREN ZUR STEUERUNG EINES SOLCHEN KREISLAUFS
REFRIGERANT CIRCUIT AND METHOD OF CONTROLLING SUCH A CIRCUIT

(30) Priorité: 16.06.2011 FR 1101858
(43) Date de publication de la demande: 23.04.2014
(73) Titulaire: Valeo Systèmes Thermiques, 78321 Le Mesnil-Saint-Denis Cedex (FR)
(72) Inventeur: LIU, Jin-Ming, F-78700 Conflans Sainte Honorine (FR)
(74) Mandataire: Tran, Chi-Hai
(86) Numéro de dépôt international: PCT/EP2012/001776
(87) Numéro de publication internationale: WO 2012/171601

(56) Documents cités:
- FR-A1- 2 958 019
- JP-A- 2003 080 931

## Description

Le secteur technique de la présente invention est celui des ensembles ou systèmes utilisés pour conditionner un flux d'air entrant dans un habitacle de véhicule automobile. Plus particulièrement, l'invention vise un circuit de fluide réfrigérant utilisé en mode de chauffage, ou pompe à chaleur, en mode de refroidissement ou en modes de déshumidification. L'invention optimise les paramètres d'utilisation de cette dernière phase de fonctionnement pour limiter la consommation à iso-performances ou augmenter les performances thermiques de ce circuit à iso-consommation.

Un véhicule automobile est classiquement équipé d'une boucle ou circuit de climatisation à l'intérieur de laquelle circule un fluide frigorigène. Cette boucle comprend classiquement un compresseur, un condenseur, un détendeur et un évaporateur parcourus dans cet ordre par le fluide frigorigène. L'évaporateur est installé dans une installation de ventilation, chauffage et/ou climatisation généralement montée dans l'habitacle du véhicule pour fournir à ce dernier un flux d'air chaud ou un flux d'air froid en fonction d'une demande de l'utilisateur du véhicule. Le condenseur est quant à lui classiquement installé en face avant du véhicule pour être traversé par le flux d'air extérieur au véhicule.

Cette boucle de climatisation peut être utilisée en mode refroidissement ou en mode chauffage. En mode refroidissement, le fluide réfrigérant est envoyé vers le condenseur où le fluide réfrigérant est refroidi par le flux d'air extérieur. Puis, le fluide réfrigérant circule vers le détendeur où il subit un abaissement de sa pression avant d'entrer dans l'évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le circuit étant une boucle fermée, le fluide réfrigérant retourne alors vers le compresseur.

En mode chauffage, le fluide est mis en circulation par le compresseur qui l'envoie vers l'évaporateur. Ce dernier se comporte alors comme un condenseur, où le fluide réfrigérant est refroidi par l'air circulant dans l'installation de ventilation. Cet air se chauffe donc au contact de l'évaporateur et apporte ainsi des calories à l'habitacle du véhicule. Après passage dans l'évaporateur, le fluide réfrigérant est détendu par un détendeur avant d'arriver dans le condenseur. Le flux d'air extérieur chauffe alors le fluide réfrigérant. Le flux d'air extérieur est par conséquent plus froid après son passage dans le condenseur comparé à sa température avant son passage au travers du condenseur. Le fluide réfrigérant retourne alors vers le compresseur.

Une telle organisation a été améliorée en complétant la boucle de climatisation présentée ci-dessus par l'ajout d'un échangeur supplémentaire traversé par le fluide réfrigérant et dont la fonction est de chauffer l'air envoyé dans l'habitacle. Ainsi, cet échangeur dit « intérieur » se comporte comme un radiateur.

Une boucle de climatisation telle qu'évoquée ci-dessus est divulguée dans le document US2011/0016896A1. La figure 4 de ce document montre un mode de déshumidification où le fluide réfrigérant circule dans l'échangeur intérieur puis à la fois dans l'échangeur extérieur et dans l'évaporateur, ces deux composants étant installés en parallèles l'un par rapport à l'autre.

Une telle organisation présente un premier inconvénient. En effet, le nombre de vannes divulguées dans ce document et nécessaires au mode de fonctionnement chauffage, refroidissement et déshumidification (1^{er} mode et 2^{nd} mode) est important. Une telle quantité de composants n'est pas compatible avec le secteur automobile où il convient de réduire au strict minimum le nombre de composants nécessaire à la réalisation d'une fonction.

La boucle présentée dans ce document présente un deuxième inconvénient. En effet, le mode déshumidification montrée sur la figure 4 de ce document emploi un seul et même dispositif de détente pour l'évaporateur et pour l'échangeur extérieur. Or, la température de l'air qui traverse chacun de ces échangeurs n'est pas la même, en particulier en raison de la position du volet d'entrée d'air qui influence la température de l'air qui traverse l'évaporateur. Il n'est alors pas possible d'adapter indépendamment le débit de fluide réfrigérant qui circule dans l'évaporateur et dans l'échangeur extérieur quand la boucle est dans le mode de déshumidification de la figure 4 de ce document. Le document JP 2003 080931 A divulgue un circuit comprenant une première branche, une deuxième branche et une troisième branche, la première branche étant en série avec la deuxième branche et la troisième branche.

Le but de la présente invention est donc de résoudre les inconvénients décrits ci-dessus principalement en permettant au fluide réfrigérant de circuler, pendant le mode de déshumidification, à la fois dans l'échangeur extérieur et dans l'évaporateur, tout en offrant la possibilité de moduler le débit de ce fluide réfrigérant indépendamment l'un par rapport à l'autre. Une telle modulation est rendue possible par la présence d'un premier organe de détente dans une branche qui alimente l'échangeur extérieur et par la présence d'un deuxième organe de détente, distinct du premier organe de détente, installé dans une branche parallèle qui alimente l'évaporateur.

L'invention a donc pour objet un circuit de fluide réfrigérant pour conditionner thermiquement un habitacle d'un véhicule selon la revendication 1, comprenant :
- une première branche dans laquelle sont installés en série au moins un compresseur et un échangeur intérieur agencé pour assurer un échange thermique entre le fluide réfrigérant et un flux d'air, dit flux d'air intérieur, destiné à être envoyé dans l'habitacle,
- une deuxième branche dans laquelle sont installés en série au moins un premier moyen de contrôle de la circulation du fluide réfrigérant dans ladite deuxième branche, un premier organe de détente et un évaporateur,
- une troisième branche dans laquelle sont installés en série au moins un deuxième organe de détente et un échangeur extérieur agencé pour assurer un échange thermique entre le fluide réfrigérant et un flux d'air, dit flux d'air extérieur, disposé à l'extérieur de l'habitacle,
- ladite première branche étant en série avec la deuxième branche et la troisième branche, ladite deuxième branche étant en parallèle de ladite troisième branche, et
- un moyen de mise en communication de la troisième branche avec la deuxième branche, ledit moyen étant installé entre un secteur de la troisième branche situé en aval de l'échangeur extérieur et une portion de la deuxième branche située en amont du premier organe de contrôle, selon un sens dans lequel le fluide réfrigérant est apte à circuler dans la branche concernée.

Selon une première caractéristique de l'invention, le moyen de mise en communication est formé par au moins un organe de gestion de la circulation du fluide réfrigérant dans le secteur ou dans une conduite installée entre le secteur et la portion.

Selon une deuxième caractéristique de l'invention, l'organe de gestion est formé par une première vanne deux voies installée dans la conduite et une deuxième vanne deux voies installée dans le secteur.

Alternativement, l'organe de gestion est formé par une vanne trois voies installée à une confluence de la conduite avec la troisième branche.

Selon une autre caractéristique de l'invention, la conduite est raccordée à la deuxième branche entre le premier moyen de contrôle et le premier organe de détente.

Selon un autre exemple de réalisation, l'organe de gestion est formé par une vanne trois voies installée à une confluence de la conduite avec la deuxième branche.

Selon encore une caractéristique de l'invention, l'organe de gestion est installé entre le premier moyen de contrôle et le premier organe de détente.

On notera que la troisième branche comprend un deuxième moyen de contrôle de la circulation de fluide réfrigérant dans ladite troisième branche.

De manière illustrative, le deuxième moyen de contrôle est installé en amont du deuxième organe de détente, selon le sens selon lequel le fluide réfrigérant est apte à circulé dans la troisième branche.

La troisième branche comprend une vanne de contournement du deuxième organe de détente.

Le circuit selon l'invention est agencé pour fonctionner selon un mode de chauffage où une quantité de chaleur absorbée par l'échangeur extérieur est dissipée dans le flux d'air intérieur par l'échangeur intérieur, selon un mode de refroidissement où une quantité de chaleur absorbée par l'échangeur intérieur, alors employé comme un évaporateur, est dissipée dans le flux d'air extérieur par l'échangeur extérieur et selon trois modes de déshumidification qui combinent le mode chauffage et le mode de refroidissement, et dans lequel un fluide réfrigérant circule dans le même sens quel que soit le mode.

Le circuit comprend donc un fluide réfrigérant et des moyens qui, dans le mode chauffage et dans les différents modes de déshumidification, sont agencés pour :
- imposer une circulation de fluide réfrigérant dans la première branche et dans la troisième branche, la deuxième branche étant dépourvue de circulation de fluide réfrigérant,
- imposer une circulation de fluide réfrigérant dans la première branche, dans la troisième branche, dans le moyen de mise en communication de la troisième branche avec la deuxième branche, et dans la deuxième branche, le secteur de la troisième branche et la portion de la deuxième branche étant dépourvus de circulation de fluide réfrigérant,
- imposer une circulation de fluide réfrigérant dans la première branche et dans la deuxième branche, la troisième branche étant dépourvue de circulation de fluide réfrigérant,
- imposer une circulation de fluide réfrigérant dans la première branche et simultanément dans la deuxième et la troisième branche.

L'invention vise aussi un procédé de contrôle d'un système de conditionnement thermique d'un flux d'air intérieur envoyé dans un habitacle d'un véhicule selon la revendication 8, comprenant un circuit tel que présenté ci-dessus et un boîtier dans lequel circule ledit flux d'air intérieur et contenant l'échangeur intérieur, l'évaporateur, et dans lequel :
- on active le circuit, avantageusement selon un mode de déshumidification,
- on détermine la présence de givre sur l'échangeur extérieur,
- en présence de givre :
   - on impose une circulation de fluide réfrigérant dans la première branche, dans la troisième branche, dans le moyen de mise en communication de la troisième branche avec la deuxième branche, et dans la deuxième branche,
- en l'absence de givre, on détermine la température du flux d'air intérieur (4),
   - si la température du flux d'air intérieur (4) est au dessus d'une température seuil, on impose une circulation de fluide réfrigérant dans la première branche (11) et dans la deuxième branche (12),
      - si une puissance délivrée par le circuit est inférieure à un seuil bas de puissance, on impose une circulation de fluide réfrigérant dans la première branche (11) et simultanément dans la deuxième et la troisième branche (12, 13),
   - si la température du flux d'air intérieur (4) est en dessous de la température seuil, on impose une circulation de fluide réfrigérant dans la première branche (11) et dans la troisième branche (13).,

Le circuit employé dans ce procédé comprend un dispositif d'entrée d'air contrôlant la quantité d'air extérieur à l'habitacle et/ou la quantité en provenance de l'habitacle admis dans le boîtier. Dans cette situation, le procédé met en oeuvre les étapes suivantes, où :
- en présence de givre, on positionne le dispositif d'entrée d'air de sorte que l'air admis dans le boîtier soit constitué d'au moins 80% d'air en provenance de l'habitacle,
- si la puissance délivrée par le circuit est au dessus d'un seuil de puissance déterminée, on positionne le dispositif d'entrée d'air de sorte que l'air admis dans le boîtier soit constitué majoritairement d'air en provenance de l'extérieur de l'habitacle,
- si la puissance délivrée par le circuit n'est pas suffisante, on positionne le dispositif d'entrée d'air de sorte que l'air admis dans le boîtier soit constitué intégralement d'air en provenance de l'habitacle,
- si la température est en dessous de la température seuil, on positionne le dispositif d'entrée d'air de sorte que l'air admis dans le boîtier soit constitué intégralement d'air en provenance de l'habitacle.

Selon un mode de mise en œuvre de ce procédé, on positionne le dispositif d'entrée d'air en fonction d'une information de qualité de l'air présent dans l'habitacle.

Enfin, le procédé détaillé ci-dessus comprend une étape de comparaison de la multiplicité de possibilité de positions du dispositif d'entrée d'air et une étape où on impose la position où la quantité d'air extérieur est la plus importante.

Un tout premier avantage selon l'invention réside dans la possibilité de mettre en adéquation le débit de fluide réfrigérant qui circule simultanément dans l'évaporateur et dans l'échangeur extérieur à la température de l'air qui traverse ces échangeurs. On garantit ainsi que chacun de ces composants travaille à un niveau d'efficacité maximum, ce qui permet d'optimiser le rendement général du circuit quand celui-ci fonctionne en modes de déshumidification.

Un autre avantage non négligeable réside dans la structure général de ce circuit qui comprend peu de vannes alors qu'il est en mesure de mettre en œuvre un cycle thermodynamique en mode de chauffage, en mode de refroidissement et trois modes distincts de déshumidification.

D'autres caractéristiques, détails et avantages de l'invention ressortiront plus clairement à la lecture de la description donnée ci-après à titre indicatif en relation avec des dessins dans lesquels :
- la figure 1 est un schéma du circuit selon l'invention fonctionnant en un mode de refroidissement de l'habitacle,
- la figure 2 est un schéma du circuit selon l'invention fonctionnant en un mode de chauffage de l'habitacle,
- la figure 3 est un schéma du circuit selon l'invention fonctionnant en un premier mode de déshumidification de l'habitacle,
- la figure 4 est un schéma du circuit selon l'invention fonctionnant en un deuxième mode de déshumidification de l'habitacle,
- la figure 5 est un schéma du circuit selon l'invention fonctionnant en un troisième mode de déshumidification de l'habitacle,
- la figure 6 est un logigramme illustrant le procédé selon l'invention.

Il faut noter que les figures exposent l'invention de manière détaillée pour mettre en œuvre l'invention, lesdites figures pouvant bien entendu servir à mieux définir l'invention le cas échéant.

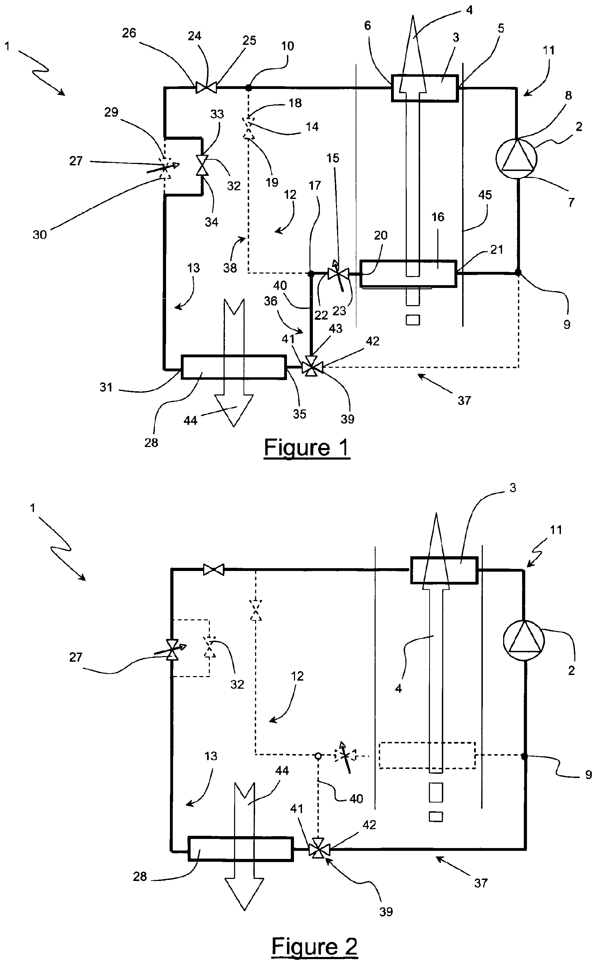

La figure 1 illustre le circuit 1 selon l'invention. On s'attachera ci-après à décrire dans un premier temps l'architecture de ce circuit quel que soit le mode de fonctionnement, puis, dans un deuxième temps, on décrira le parcours emprunté, ou apte à être emprunté, par un fluide réfrigérant circulant dans le circuit pour chacun des modes de fonctionnement.

Les termes « amont » et « aval » employés ci-dessous se réfèrent au sens de déplacement du fluide considéré dans le composant considéré.

Le circuit 1, autrement appelé boucle de climatisation, est une boucle fermée à l'intérieur de laquelle le fluide réfrigérant circule. Le fluide réfrigérant est du type d'un fluide super-critique, tel que du dioxyde de carbone, par exemple, connu sous l'appellation R744. Le fluide réfrigérant est de préférence un fluide sous-critique, tel que l'hydrofluorocarbone, connu sous l'acronyme R134a, ou un fluide frigorigène à faible nuisance sur l'effet de serre, c'est-à-dire qui soit en mesure d'offrir une solution durable pour les climatiseurs automobiles, connu sous la dénomination HFO1234yf. Pour les deux types de fluide évoqué ci-dessus, le circuit peut comprendre un échangeur interne (non représenté) chargé d'améliorer les performances du circuit par échange thermique entre le fluide réfrigérant soumis à haute température - haute pression et ce même fluide réfrigérant soumis à basse température - basse pression.

Le fluide réfrigérant est mis en circulation par un compresseur 2, par exemple entraîné par un moteur électrique, notamment intégré dans un boîtier du compresseur. La fonction de ce dernier est d'augmenter la pression et la température du fluide réfrigérant. On notera que le compresseur 2 peut également être entraîné par une poulie mise en mouvement par un moteur à combustion interne monté sur le véhicule, notamment via une courroie.

Le compresseur 2 comprend un orifice d'admission 7 par lequel le fluide réfrigérant, à basse pression et à basse température, entre dans le compresseur. Ce fluide sort du compresseur 2 par un orifice d'évacuation 8 dans un état de haute pression et haute température, comparé à l'état de ce même fluide à l'orifice d'admission 7.

En amont du compresseur 2 et relié de manière directe à l'orifice d'admission 7 par un dispositif de transport du fluide réfrigérant, on trouve un point de convergence 9. Ce dernier forme l'endroit un fluide réfrigérant provenant de deux branches distinctes se combine pour ne former qu'un seul flux. On notera que ce point de convergence 9 forme un point de départ, autrement dit une des extrémités, d'une première branche 11 du circuit 1.

Directement en aval du compresseur 2, on trouve un échangeur de chaleur qualifié « d'intérieur » en ce sens qu'il est destiné à modifier la température d'un flux d'air intérieur 4 envoyé dans l'habitacle. Cet échangeur intérieur, référencé 3, est ainsi agencé pour réaliser un échange thermique entre le flux d'air intérieur 4 et le fluide réfrigérant circulant dans le circuit 1. Ainsi, quand le circuit 1 de fluide réfrigérant fonctionne en mode de chauffage, le fluide réfrigérant transmet ses calories au flux d'air intérieur 4. Un tel échangeur intérieur comprend un premier orifice 5 par lequel le fluide réfrigérant en provenance du compresseur 2 pénètre dans l'échangeur intérieur. L'échangeur intérieur 3 comprend également un deuxième orifice 6 par lequel le fluide réfrigérant sort après avoir échangé thermiquement avec le flux d'air intérieur 4.

Cet échangeur intérieur 3 est installé dans un boîtier 45 chargé de canaliser le flux d'air intérieur 4 avant d'entrer dans l'habitacle d'un véhicule automobile.

Un dispositif de transport du fluide réfrigérant relie donc directement l'orifice d'évacuation 8 du compresseur 2 et le premier orifice 5 de l'échangeur intérieur 3 sans la présence d'aucun autre composant dit « actif », c'est-à-dire influençant le cycle thermodynamique.

Un dispositif de transport du fluide caloporteur tel qu'un conduit ou tube met en communication directement le deuxième orifice 6 de l'échangeur intérieur 3 avec un point de divergence 10. Un tel point forme un « Y » où le fluide réfrigérant est susceptible d'être séparé en deux flux distincts envoyés vers une deuxième branche du circuit, référencée 12, et une troisième branche du circuit, référencée 13. Le point de divergence 10 forme la seconde extrémité de la première branche 11.

On comprend de ce qui précède que la première branche 11 est formée par une partie du circuit 1 qui s'étend du point de convergence 9 au point de divergence 10. La première branche 11 comprend ainsi, avantageusement uniquement, le compresseur 2, l'échangeur intérieur 3 et des moyens de transport du fluide réfrigérant, tous installés en série les uns vis-à-vis des autres.

La première branche 11, la deuxième branche 12 et la troisième branche 13 sont raccordées les unes avec les autres au niveau du point de convergence 9 et au niveau du point de divergence 10. La deuxième branche 12 et la troisième branche 13 débutent ainsi par le point de divergence 10 et se terminent par le point de convergence 9. On comprend d'une telle structure que la deuxième branche et la troisième branche sont en parallèles l'une par rapport à l'autre mais elles sont toutes les deux en série de la première branche 11.

La deuxième branche 12 comprend des composants installés en série et actifs sur le cycle thermodynamique qui prend place dans le circuit 1. Parmi ces composants, on trouve un premier moyen de contrôle 14 de la circulation du fluide réfrigérant dans la deuxième branche 12. Un tel premier moyen est une vanne tout/ou rien mais il peut s'agir également d'une vanne proportionnelle où la vanne peut prendre toutes positions comprises entre 0 et 100% d'ouvertures.

Le premier moyen de contrôle 14 comprend ainsi une entrée 18 par laquelle le fluide réfrigérant arrive et une sortie 19 par laquelle le fluide réfrigérant sort du premier moyen de contrôle. L'entrée 18 du premier moyen de contrôle est raccordée, par exemple directement, au point de divergence 10.

La deuxième branche 12 comprend encore un premier organe de détente 15 chargé d'abaisser la pression du fluide réfrigérant, et ainsi assurer une détente nécessaire au fonctionnement du cycle thermodynamique qui prend place dans le circuit 1 de fluide réfrigérant. Cet organe de détente 15 est installé en aval du premier moyen de contrôle 14 et directement en amont d'un évaporateur 16. En pratique, un tel organe de détente prend la forme d'un orifice fixe ou d'un détendeur thermostatique. De manière alternative, un tel premier organe 15 peut prendre la forme d'un détendeur à commande électronique.

Entre le premier moyen de contrôle 14 et le premier organe de détente 15, la deuxième branche 12 comprend un point de mélange 17 qui sera détaillé plus bas.

La sortie 19 du premier moyen de contrôle 14 est connectée directement au point de mélange 17 par un dispositif de transport de fluide réfrigérant.

Le premier organe de détente 15 comprend une entrée 22 connectée directement au point de mélange 17 et une sortie 23 raccordée directement à l'évaporateur 16.

La deuxième branche 12 comprend également l'évaporateur 16 installé dans le boîtier 45 de sorte à être traversé par le flux d'air intérieur 4. Cet évaporateur 16 est placé en amont de l'échangeur intérieur 3 selon les sens de déplacement du flux d'air intérieur 4 dans le boîtier 45. Ce composant est un échangeur thermique destiné à refroidir le flux d'air intérieur 4 qui passe à son travers quand le circuit est, par exemple, en mode de refroidissement. Cet évaporateur assure également un assèchement du flux d'air intérieur 4 par condensation sur ses parois externes, une telle fonction étant particulièrement mise en œuvre pendant les modes de déshumidification.

Cet évaporateur comprend un orifice d'entrée 20 raccordé directement à la sortie 23 du premier organe de détente 15, ainsi qu'un orifice de sortie 21 raccordée directement au point de convergence 9.

On comprend de ce qui précède que la deuxième branche 12 est formée par une partie du circuit 1 qui s'étend du point de divergence 10 au point de convergence 9. La deuxième branche 12 comprend ainsi, avantageusement uniquement, le premier moyen de contrôle 14 de la circulation du fluide réfrigérant dans la deuxième branche, le point de mélange 17, le premier organe de détente 15, l'évaporateur 16 et des moyens de transport du fluide réfrigérant pour relier ces composants, tous installés en série les uns par rapport aux autres.

La troisième branche 13 débute au point de divergence 10 et comprend des composants installés en série et actifs sur le cycle thermodynamique qui prend place dans le circuit 1. Parmi ces composants, on trouve un deuxième moyen de contrôle 24 de la circulation du fluide réfrigérant dans la troisième branche 13. Un tel deuxième moyen est une vanne tout ou rien mais il peut s'agir également d'une vanne proportionnelle où la vanne peut prendre toutes positions comprises entre 0 et 100% d'ouverture.

Ce deuxième moyen de contrôle 24 comprend une entrée 25 connectée directement au point de divergence 10 et une sortie 26, cette dernière étant raccordée à un deuxième organe de détente 27. Ce dernier est chargé d'abaisser la pression du fluide réfrigérant, et ainsi assurer une détente nécessaire au fonctionnement du cycle thermodynamique qui prend place dans le circuit 1 de fluide réfrigérant. Ce deuxième organe de détente 27 est installé directement en aval du deuxième moyen de contrôle 24 et directement en amont d'un échangeur extérieur 28. En pratique, un tel organe de détente prend la forme d'un orifice fixe ou d'un détendeur thermostatique. De manière alternative, un tel premier organe 15 peut prendre la forme d'un détendeur à commande électronique.

On comprend ainsi que le deuxième moyen de contrôle 24 est installé en amont, avantageusement directement, du deuxième organe de détente 27.

Le deuxième organe de détente 27 présente une entrée 29 raccordée directement à la sortie 26 du deuxième moyen de contrôle 24 et une sortie 30 raccordée directement à un orifice d'entrée 31 de l'échangeur extérieur 28.

En fonction du mode de fonctionnement sélectionné, le fluide réfrigérant peut contourner le deuxième organe de détente 27. Pour ce faire, la troisième branche 13 comprend une vanne de contournement 32 du deuxième organe de détente 27.

Cette vanne de contournement 32 est alors installée en parallèle exclusivement du deuxième organe de détente 27. Ainsi, une conduite relie l'entrée 29 du deuxième organe de détente 27 avec une entrée 33 de la vanne de contournement 32. De manière similaire, il est prévu une autre conduite qui relie la sortie 30 du deuxième organe de détente 27 à une sortie 34 de la vanne de contournement 32.

Ainsi, l'entrée 29 du deuxième organe de détente 27 et l'entrée 33 de la vanne de contournement 32 sont toutes deux reliées directement à la sortie 26 du deuxième moyen de contrôle 24 de la circulation du fluide réfrigérant. Le deuxième organe de détente 27 et la vanne de contournement 32 sont tous deux directement en aval du deuxième moyen de contrôle 24.

La sortie 30 du deuxième organe de détente 27 et la sortie 34 de la vanne de contournement 32 sont toutes deux reliées directement à l'orifice d'entrée 31 de l'échangeur extérieur 28.

Le circuit 1 comprend par ailleurs l'échangeur de chaleur référencé 28 qualifié « d'extérieur », en ce sens qu'il est agencé pour réaliser un échange thermique entre un flux d'air extérieur 44 à l'habitacle du véhicule et le fluide réfrigérant qui circule dans le circuit 1.

Un tel échangeur extérieur peut être utilisé en tant que refroidisseur de gaz ou condenseur quand le circuit de fluide réfrigérant est opéré en mode de refroidissement du flux d'air envoyé dans l'habitacle.

Ce même échangeur peut également être utilisé en tant qu'évaporateur quand le circuit de fluide réfrigérant est opéré en mode chauffage du flux d'air envoyé dans l'habitacle.

Cet échangeur extérieur 28 comprend un orifice de sortie 35 connecté directement à un moyen de mise en communication 36 de la troisième branche 13 avec la deuxième branche 12.

A partir de l'orifice de sortie 35, la troisième branche 13 se poursuit par un secteur 37 qui s'étend jusqu'au point de convergence 9, selon cette disposition, le secteur 37 est en aval de l'échangeur extérieur 28.

Le circuit 1 selon l'invention comprend également le moyen de mise en communication 36 de la troisième branche 13 avec la deuxième branche 12. La mise en communication de ces deux branches est effectuée entre le secteur 37 de la troisième branche 13 et une portion 38 de la deuxième branche 12 qui s'étend du point de divergence 10 jusqu'à l'entrée 22 du premier organe de détente 15. De manière plus précise, la portion 38 débute à la sortie 19 du premier moyen de contrôle 14.

Autrement dit, le point de mélange 17 est placé en aval du premier moyen de contrôle 14 et en amont du premier organe de détente 15, soit entre la sortie 19 du premier moyen de contrôle 14 et l'entrée 22 du premier organe de détente 15.

Selon un mode de réalisation, le moyen de mise en communication 36 prend la forme d'au moins un moyen ou organe de gestion 39 de la circulation du fluide réfrigérant dans le secteur 37 combiné à une conduite 40 installée entre le secteur 37 et la portion 38, la conduite 40 étant raccordée au point de mélange 17. La conduite est ici formée par un tube et plus généralement par tout moyen inactif sur le cycle thermodynamique et apte à transporter le fluide réfrigérant d'un premier point à un second point du circuit.

Selon un exemple de réalisation non représenté, l'organe de gestion est formé par une première vanne deux voies installée dans la conduite et une deuxième vanne deux voies installée dans le secteur.

Alternativement et comme représenté sur les figures 1 à 5, l'organe de gestion 39 est formé par une vanne trois voies installée à une confluence de la conduite 40 avec le secteur 37 formée au niveau de la troisième branche 13.

Que cela soit une vanne trois voies ou une pluralité de vannes deux voies, celles-ci gèrent la circulation du fluide réfrigérant dans le secteur 37 à destination du point de convergence 9 et/ou à destination de la portion 38 formée au niveau de la deuxième branche 12.

Ces vannes peuvent également fonctionner selon un mode tout ou rien, ou selon un mode proportionnel dans lequel la vanne peut prendre toutes positions comprises entre 0 et 100% d'ouverture.

De manière alternative au positionnement de l'organe de gestion 39 envisagé ci-dessus, l'invention prévoit le cas où l'organe de gestion est formé par une vanne trois voies installée à une confluence de la conduite avec la deuxième branche, autrement au niveau du point de mélange.

Selon l'exemple de la figure 1, l'organe de gestion 39 présente une entrée 41 directement raccordée à l'orifice de sortie 35 de l'échangeur extérieur 28. On comprend donc que cet organe de gestion 39 est en aval de l'échangeur extérieur 28.

L'organe de gestion 39 comprend encore une première sortie 42 raccordée au point de convergence 9 par un élément de transport de fluide inactif sur le cycle thermodynamique. Enfin, l'organe de gestion 39 présente une deuxième sortie 43 raccordée au point de mélange 17 directement par la conduite 40.

La figure 1 montre le circuit 1 selon l'invention dans une mode de refroidissement de l'air envoyé dans l'habitacle du véhicule.

Le fluide réfrigérant est comprimé par le compresseur 2 et sort de ce dernier par l'orifice d'évacuation 8 à l'état gazeux, soumis à haute pression et haute température. Ce fluide réfrigérant traverse l'échangeur intérieur 3 sans subir d'échange thermique avec le flux d'air intérieur 4. Pour ce faire, un volet (non représenté) interdit le passage du flux d'air au travers de l'échangeur intérieur. Selon une variante de réalisation non représentée, le circuit 1 peut comprendre un tube de contournement de l'échangeur intérieur qui évite au fluide réfrigérant de passer dans cet échangeur. En tout état de cause, l'échangeur intérieur est inactif vis-à-vis du flux d'air intérieur 4.

Le fluide réfrigérant poursuit son chemin et arrive au point de divergence 10. Comme le premier moyen de contrôle 14 est fermé, le fluide réfrigérant ne circule pas dans la deuxième branche 12. Corrélativement, le deuxième moyen de contrôle 24 est ouvert, autorisant une circulation de fluide réfrigérant vers l'échangeur extérieur 28. Avant d'atteindre ce dernier, le fluide réfrigérant passe par la vanne de contournement 32 sans subir d'abaissement de la pression.

Le fluide réfrigérant est alors refroidit par le flux d'air extérieur 44.

L'organe de gestion 39 est placé dans une position où le fluide réfrigérant circule de l'entrée 41 vers la deuxième sortie 43 et circule au travers de la conduite 40 vers le point de mélange 17. Le fluide réfrigérant est ensuite détendu par le premier organe de détente 15 puis traverse l'évaporateur 16, où il capte les calories présent dans le flux d'air intérieur 4, climatisant ainsi l'habitacle du véhicule. Le fluide réfrigérant ainsi soumis à basse pression et basse température atteint ensuite le point de convergence 9, puis rejoint l'orifice d'admission 7 du compresseur 2, avant d'effectuer un nouveau cycle thermodynamique.

Dans ce mode de refroidissement, on notera que la conduite située entre le première sortie 42 de l'organe de gestion 39 et le point de convergence 9 n'est pas parcourus par le fluide réfrigérant. De même, la deuxième branche 12 située entre le point de divergence 10 et le point de mélange 10 ne voit pas de circulation de fluide réfrigérant.

La figure 2 montre le circuit 1 quand celui-ci est utilisé en mode de chauffage de l'habitacle. On notera que le fluide réfrigérant circule dans le même sens au cœur du circuit 1 que le sens de circulation pour le mode de refroidissement présenté ci-dessus. La description ci-dessous s'attache aux différences et on se reportera à la description de la figure 1 pour les éléments identiques.

La première branche 11 est parcourue par le fluide réfrigérant mis en mouvement par le compresseur 2. L'échangeur intérieur 3 dissipe les calories présentes dans le fluide réfrigérant, soumis à haute pression et haute température, dans le flux d'air intérieur 4 qui traverse l'échangeur intérieur. On assure ainsi le chauffage de l'air envoyé dans l'habitacle.

La vanne de contournement 32 est ici en position fermée et le fluide réfrigérant traverse alors le deuxième organe de détente 27 où il subit un abaissement de sa pression. Le fluide réfrigérant atteint alors l'échangeur extérieur 28 et traverse ce dernier en subissant un échauffement au bénéfice du flux d'air extérieur 44.

L'organe de gestion 39 autorise la circulation du fluide réfrigérant depuis son entrée 41 vers sa première sortie 42. Le fluide réfrigérant rejoint alors le point de convergence 9 en passant au travers du secteur 37 avant de rejoindre le compresseur.

La deuxième branche 12 et la conduite 40 ne sont ainsi pas traversées par le fluide réfrigérant puisque ce dernier circule exclusivement dans la première branche 11 et dans la troisième branche 13.

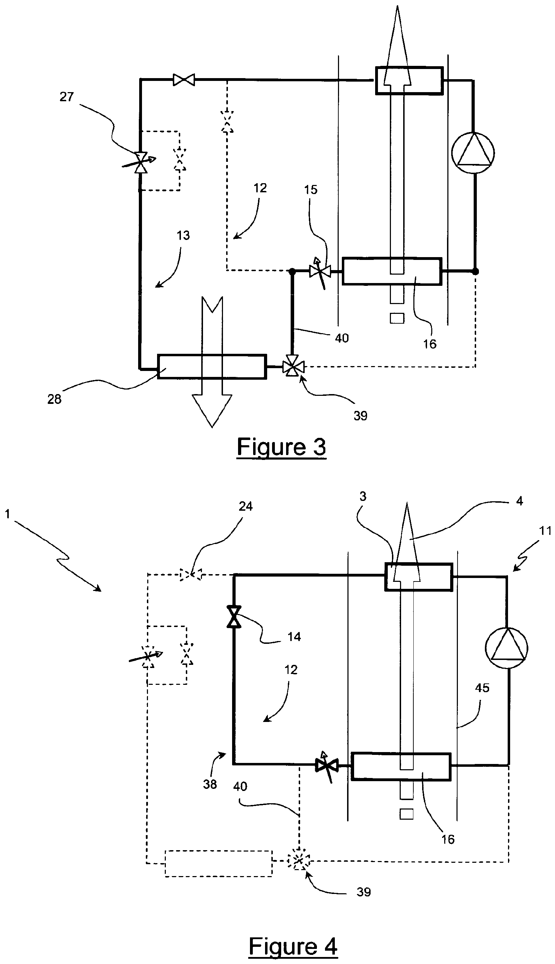

La figure 3 montre le circuit 1 quand celui-ci est employé selon un premier mode de déshumidification. D'une manière générale, les modes de déshumidification sont une combinaison du mode de chauffage et du mode de refroidissement évoqués aux figures ci-dessus.

On notera que le fluide réfrigérant circule dans le même sens au cœur du circuit 1 que le sens de circulation pour les modes décrits précédemment.

La description ci-dessous s'attache aux différences par rapport à la figure 1.

La puissance de chauffe à fournir par le circuit 1 pour réaliser un premier mode de déshumidification est faible. Cela se traduit par une température à l'extérieure de l'habitacle comprise entre + 5 et -20 °C, et un état de givrage de l'échangeur extérieur 28.

Dans ce premier mode de déshumidification, l'échangeur extérieur 28 est placé en série avec l'évaporateur 16. Une telle mise en série résulte de la mise en communication de la troisième branche 13 avec la deuxième branche 12 grâce à l'organe de gestion 39 et à la conduite 40.

Chacun de ces échangeurs est précédé de son propre organe de détente. En effet, le fluide réfrigérant traverse le deuxième organe de détente 27 où il subit un abaissement de sa pression avant de traverser l'échangeur extérieur 28. De manière similaire, le premier organe de détente 15 abaisse la pression du fluide réfrigérant avant que celui-ci ne pénètre dans l'évaporateur 16. Même si le premier organe de détente 15 est influencé par le niveau de détente du deuxième organe de détente 27, il est néanmoins possible d'adapter le débit de fluide réfrigérant à l'intérieur de ces échangeurs de manière séparée.

La figure 4 montre un deuxième mode de déshumidification mis en œuvre par le circuit 1 selon l'invention. Le deuxième mode de déshumidification permet au circuit 1 de délivrer une puissance de chauffe supérieure à celle du premier mode de déshumidification précédemment détaillé.

La puissance de chauffe à fournir par le circuit 1 pour réaliser le deuxième mode de déshumidification est moyenne. Cela se traduit par une température mesurée à l'intérieur de l'habitacle supérieure à 20°C et une puissance de chauffe du circuit qui soit inférieure à la puissance demandée selon une consigne de température.

Ici, le chauffage du flux d'air intérieur 4 et la déshumidification de ce dernier sont assurés seulement par l'échangeur intérieur 3, l'évaporateur 16 et la position d'un dispositif d'entrée d'air qui gère la provenance du flux d'air envoyé dans le boîtier 45.

Dans ce deuxième mode de déshumidification, le fluide réfrigérant circule uniquement dans la première branche 11 et dans la deuxième branche 12. Pour ce faire, le premier moyen de contrôle 14 est ouvert alors que le deuxième moyen de contrôle 24 est placé en position fermée. De même, l'organe de gestion 39 interdit toute circulation dans le conduit 40 si bien que l'intégralité du fluide réfrigérant qui passe au travers de l'échangeur intérieur 3 traverse également l'évaporateur 16.

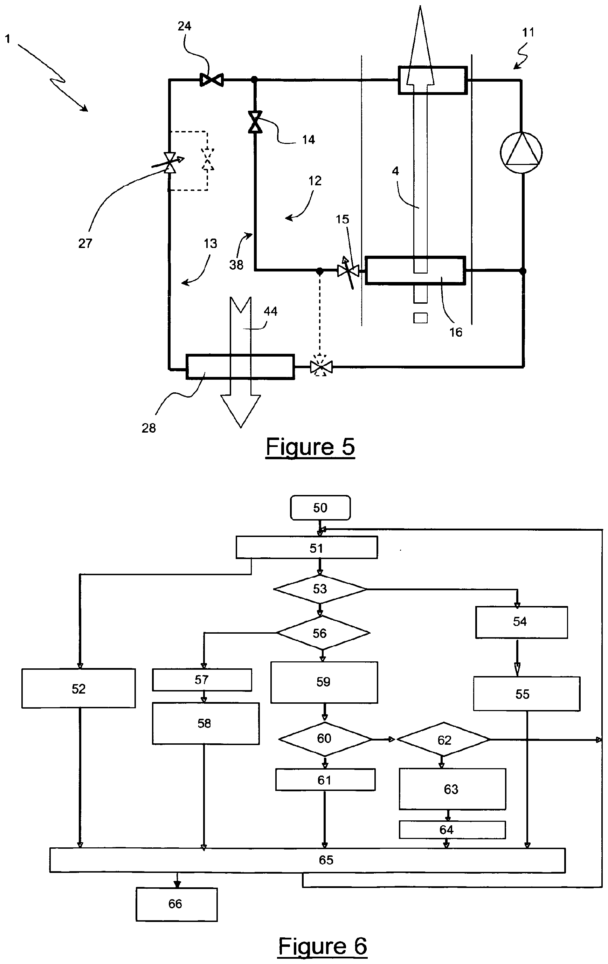

La figure 5 montre un troisième mode de déshumidification mis en œuvre par le circuit 1. Selon ce mode, la puissance de chauffe à fournir par le circuit 1 pour réaliser ce mode de déshumidification est importante. Cela se traduit par une température mesurée à l'intérieur de l'habitacle qui soit supérieure à 20°C et par une puissance de chauffe fournit par le seul échangeur interne 3 qui soit insuffisante. Pour pallier une telle insuffisance de chauffage, le circuit 1 puise les calories présentes dans l'air extérieur via l'échangeur externe 28

L'énergie thermique est alors puisée en parallèle sur l'échangeur extérieur 28 et sur l'évaporateur 16.

Dans une telle situation, le fluide réfrigérant circule dans la première branche 11 et simultanément dans la deuxième branche 12 et dans la troisième branche 13. Pour ce faire, le premier moyen de contrôle 14 et le deuxième moyen de contrôle 24 sont ouverts et laissent passer le fluide réfrigérant.

Le premier organe de détente 15 abaisse la pression du fluide réfrigérant de manière totalement indépendante de la chute de pression opérée par le deuxième organe de détente 27. Il est ainsi possible d'adapter le débit de fluide réfrigérant dans l'échangeur extérieur 28 et dans l'évaporateur 16 respectivement en fonction de la température du flux d'air extérieur 44 et en fonction de la température du flux d'air intérieur 4.

On comprend ainsi que le circuit exposé ci-dessus comprend des moyens pour faire circuler le fluide réfrigérant soit :
- seulement dans la deuxième branche 12,
- seulement dans la troisième branche 13,
- dans la troisième branche 13 puis dans la deuxième branche 12 par une circulation en série de l'échangeur extérieur 28 par rapport à l'évaporateur 16 via le moyen de mise en communication 36,
- simultanément, c'est-à-dire en parallèle, dans la deuxième branche 12 et dans la troisième branche 13,
les circulations indiquées ci-dessus étant nécessairement combinées à une circulation du fluide réfrigérant dans la première branche 11.

La figure 6 illustre un procédé de contrôle, ou de commande, d'un système de conditionnement thermique d'un flux d'air intérieur envoyé dans un habitacle d'un véhicule comprenant un circuit 1 tel que détaillé ci-dessus. Le système de conditionnement thermique comprend en outre le boîtier 45 dans lequel circule le flux d'air intérieur 4. Ce boîtier 45 enferme l'évaporateur 16 et l'échangeur intérieur 3 afin que le flux d'air intérieur les traverse selon cet ordre.

Le procédé selon l'invention prévoit une étape 50 au cours de laquelle le circuit 1 est mis en fonctionnement. De manière optionnelle, le procédé se poursuit par une étape 51 qui est une étape d'acquisition de données, en particulier la température du flux d'air intérieur, la température du flux d'air extérieur, des pressions de fluide réfrigérant, etc...

Le procédé fait un choix décisionnel entre trois modes de déshumidification et un mode de chauffage. Il est également prévu un cinquième choix relatif à la qualité de l'air présent dans l'habitacle, un tel choix étant prioritaire au regard des autres modes de fonctionnement. L'analyse de la qualité de l'air à l'intérieur de l'habitacle est illustrée à l'étape 52 où au moins un capteur détermine une quantité de polluant présent dans le flux d'air intérieur 4, notamment le dioxyde de carbone. Si la mesure dépasse un seuil déterminé, l'étape 52 prévoit un positionnement du dispositif d'entrée d'air contrôlant la quantité d'air extérieur à l'habitacle et/ou la quantité en provenance de l'habitacle admis dans le boîtier selon une position où seulement l'air extérieur est admis dans le boîtier 45. Un tel dispositif est par exemple un ou plusieurs volets d'entrée d'air et on se référera à cet exemple de réalisation dans la suite de la description.

A l'étape 53, le procédé effectue une détermination de la présence de givre sur l'échangeur extérieur 28. Une telle situation peut se produire notamment quand le circuit fonctionne en mode de chauffage et que la température extérieure est comprise entre -20 et +5 °C.

Si la présence de givre sur l'échangeur extérieur 28 est vérifiée, on impose à l'étape 54 une circulation de fluide réfrigérant dans la première branche 11, dans la troisième branche 13, dans le moyen de mise en communication 36 de la troisième branche 13 avec la deuxième branche 12, et dans la deuxième branche 12. En revanche, le procédé contrôle le circuit 1 afin que le secteur 37 et la portion 38 ne soient pas parcourus par le fluide réfrigérant.

Une telle configuration correspond à la circulation illustrée à la figure 3 et on se reportera à la description de cette figure pour en connaître les détails. Cette étape 54 s'accompagne d'une étape 55 où, en présence de givre, on positionne le dispositif d'entrée d'air de sorte que l'air admis dans le boîtier soit constitué d'au moins 80% d'air en provenance de l'habitacle.

Les mesures présentées ci-dessus permettent de déshumidifier le flux d'air envoyé dans l'habitacle tout en limitant la charge thermique sur l'échangeur extérieur. Le déficit de charge thermique est alors récupéré sur l'évaporateur grâce au fait que l'air qu'il reçoit est chaud. En effet, l'échangeur intérieur a préalablement chauffé l'air présent dans l'habitacle et il est avantageux de prélever une partie de cet air chaud pour que l'échange thermique réalisé au niveau de l'évaporateur soit effectué entre des fluides présentant un écart de température important.

Si le procédé ne détecte pas de givre, on passe à l'étape 56. Cette étape effectue un choix décisionnel en rapport avec la température de l'air dans l'habitacle, autrement appelé flux d'air intérieur 4. La température mesurée au cours de l'étape 51 est alors comparée à une valeur seuil.

Si la température du flux d'air intérieur est en dessous de la température seuil, une étape 57 impose une circulation de fluide réfrigérant seulement dans la première branche et dans la troisième branche, la deuxième branche 12 étant dépourvue de circulation de fluide réfrigérant. Le deuxième organe de détente abaisse la pression du fluide réfrigérant en amont de l'échangeur extérieur. Une telle circulation correspond au mode de chauffage illustré à la figure 2 et on se reportera à la description de cette figure pour en connaître la structure.

Une étape 58 suit immédiatement l'étape 57. L'étape 58 positionne le dispositif d'entrée d'air de sorte que l'air admis dans le boîtier soit constitué intégralement d'air en provenance de l'habitacle.

Une telle organisation permet de faire entrer dans l'échangeur intérieur un flux d'air préalablement chauffé, le flux d'air intérieur circulant ici en boucle fermée dans l'habitacle via l'échangeur intérieur. L'élévation de la température dans l'habitacle est ainsi plus rapide.

Si à l'étape 56, il est déterminé que la température du flux d'air intérieur est supérieure à la valeur seuil, le procédé prévoit une étape 59 au cours de laquelle on impose une circulation de fluide réfrigérant seulement dans la première branche et dans la deuxième branche, la troisième branche étant dépourvue de circulation de fluide réfrigérant. Une telle circulation est présentée à la figure 4 comme le deuxième mode de déshumidification et on se reportera à la description de cette figure pour en connaître la structure.

Après l'étape 59, le procédé met en œuvre une étape décisionnelle 60 au cours de laquelle il est déterminé la puissance délivrée par le circuit de fluide réfrigérant.

Si la puissance délivrée dépasse un seuil haut déterminé, on considère que la puissance disponible est supérieure au besoin thermique de l'habitacle. L'étape 61 positionne alors le dispositif d'entrée d'air dans une position qui va diminuer la température de l'air en amont de l'évaporateur 16. Pour ce faire, l'étape 61 positionne le ou les volets d'entrée d'air de sorte que l'air admis dans le boîtier soit constitué majoritairement d'air en provenance de l'extérieur de l'habitacle.

En revanche, si l'étape 60 détermine que la puissance disponible est inférieure au besoin thermique, une étape 62 compare la puissance disponible sur le circuit avec le besoin thermique et détermine si cette puissance est en dessous d'un seuil bas déterminé différent, en particulier inférieur, au seuil haut évoqué ci-dessus.

Si le résultat de cette comparaison montre que la puissance disponible est supérieure à ce seuil bas, le procédé renvoie à l'étape 51.

En revanche, si le résultat de cette comparaison montre que la puissance disponible est inférieure à ce seuil bas, le procédé active une étape 63 qui impose une circulation de fluide réfrigérant dans la première branche et simultanément dans la deuxième et la troisième branche, grâce au moyen de mise en communication de la troisième branche avec la deuxième branche. Une telle circulation correspond au troisième mode de déshumidification présenté à la figure 5 et on se reportera à la description de cette figure pour en connaître la structure.

Après cette étape 63, le procédé prévoit une étape 64 où on positionne le dispositif d'entrée d'air de sorte que l'air admis dans le boîtier soit constitué intégralement d'air en provenance de l'habitacle. Ainsi, le flux d'air envoyé sur l'évaporateur est chaud puisqu'il provient de l'habitacle, ce qui permet de faire fonctionner l'évaporateur plus efficacement car l'écart de température entre le flux d'air et le fluide réfrigérant est important.

Ce troisième mode de déshumidification permet de faire fonctionner l'échangeur extérieur avec un débit de fluide réfrigérant adapté à la température du flux d'air extérieur qui le traverse, une telle adaptation étant mise en œuvre par le deuxième organe de détente. Parallèlement à cela, l'invention permet de faire fonctionner l'évaporateur avec un débit de fluide réfrigérant adapté à la température du flux d'air qui traverse l'évaporateur, cette température étant influencée par la position du dispositif d'entrée d'air disposé à l'entrée du boîtier.

Le procédé selon l'invention prévoit une étape 65 de comparaison de la multiplicité de positions du dispositif d'entrée d'air déterminées ci-dessus et une étape 66 où on impose la position dans laquelle la quantité d'air extérieur est la plus importante.

On garantit ainsi un choix où le renouvellement en air extérieur est maximum comparé aux autres positions du ou des volets reçues à l'étape 65.

Sur les figures 1 à 5, les traits forts représentent les parties du circuit dans lesquelles circule le fluide réfrigérant, comparativement aux traits en pointillé qui représentent les parties du circuit de climatisation dans lesquelles le fluide réfrigérant ne circule pas.

La description ci-dessus emploi le terme « directement » pour qualifier la position d'un composant par rapport à un autre. Ce terme doit être compris en ce sens qu'un premier composant considéré est adjacent à une deuxième composant considéré, ou éventuellement relié l'un à l'autre exclusivement par un moyen de transport de fluide réfrigérant qui prend, par exemple, la forme d'un conduit ou d'un tube, notamment flexible ou rigide. Autrement dit, le premier composant considéré est relié au deuxième composant considéré par un moyen inactif au regard du cycle thermodynamique qui s'opère dans le circuit.

## Revendications

1. Circuit (1) de fluide réfrigérant pour conditionner thermiquement un habitacle d'un véhicule, comprenant :
- une première branche (11) dans laquelle sont installés en série au moins un compresseur (2) et un échangeur intérieur (3) agencé pour assurer un échange thermique entre le fluide réfrigérant et un flux d'air, dit flux d'air intérieur (4), destiné à être envoyé dans l'habitacle,
- une deuxième branche (12) dans laquelle sont installés en série au moins un premier moyen de contrôle (14) de la circulation du fluide réfrigérant dans ladite deuxième branche (12), un premier organe de détente (15) et un évaporateur (16),
- une troisième branche (13) dans laquelle sont installés en série au moins un deuxième organe de détente (27) et un échangeur extérieur (28) agencé pour assurer un échange thermique entre le fluide réfrigérant et un flux d'air, dit flux d'air extérieur (44), disposé à l'extérieur de l'habitacle,
- ladite première branche (11) étant en série avec la deuxième branche (12) et la troisième branche (13), ladite deuxième branche (12) étant en parallèle de ladite troisième branche (13),
- un moyen de mise en communication (36) de la troisième branche (13) avec la deuxième branche (12), ledit moyen étant installé entre un secteur (37) de la troisième branche (13) situé en aval de l'échangeur extérieur (28) et une portion (38) de la deuxième branche (12) située en amont du premier organe de détente (15), **caractérisé en ce que**
le circuit (1) est agencé pour fonctionner selon un mode de chauffage où une quantité de chaleur absorbée par l'échangeur extérieur (28) est dissipée dans le flux d'air intérieur (4) par l'échangeur intérieur (3), selon un mode de refroidissement où une quantité de chaleur absorbée par l'échangeur intérieur (3) est dissipée dans le flux d'air extérieur (44) par l'échangeur extérieur (28), et selon au moins trois modes de déshumidification qui combinent le mode de chauffage et le mode de refroidissement, et dans lequel un fluide réfrigérant circule dans le même sens quel que soit le mode.

2. Circuit selon la revendication 1, dans lequel le moyen de mise en communication (36) est formé par au moins un organe de gestion (39) de la circulation du fluide réfrigérant dans le secteur (37) ou dans une conduite (40) installée entre le secteur (37) et la portion (38).

3. Circuit selon la revendication 2, dans lequel la conduite (40) est raccordée à la deuxième branche (12) entre le premier moyen de contrôle (14) et le premier organe de détente (15).

4. Circuit selon l'une quelconque des revendications précédentes, dans lequel la troisième branche (13) comprend un deuxième moyen de contrôle (24) de la circulation de fluide réfrigérant dans ladite troisième branche (13).

5. Circuit selon la revendication 4, dans lequel le deuxième moyen de contrôle (24) est installé en amont du deuxième organe de détente (27).

6. Circuit selon l'une quelconque des revendications précédentes, dans lequel la troisième branche (13) comprend une vanne de contournement (32) du deuxième organe de détente (27).

7. Circuit selon l'une des revendications précédentes, comprenant des moyens (14, 24, 39, 40) qui, en modes de déshumidification, sont agencés pour :
- imposer une circulation de fluide réfrigérant dans la première branche (11) et dans la troisième branche (13),
- imposer une circulation de fluide réfrigérant dans la première branche (11), dans la troisième branche (13), dans le moyen de mise en communication (36) de la troisième branche (13) avec la deuxième branche (12), et dans la deuxième branche (12),
- imposer une circulation de fluide réfrigérant dans la première branche (11) et dans la deuxième branche (12),
- imposer une circulation de fluide réfrigérant dans la première branche (11) et simultanément dans la deuxième et la troisième branche (12, 13).

8. Procédé de contrôle d'un système de conditionnement thermique d'un flux d'air intérieur (4) envoyé dans un habitacle d'un véhicule comprenant un circuit selon l'une quelconque des revendications précédentes et un boîtier (45) dans lequel circule ledit flux d'air intérieur (4), et contenant l'échangeur intérieur (3), l'évaporateur (16), dans lequel :
a) on active le circuit,
b) on détermine la présence de givre sur l'échangeur extérieur (28),
c) en présence de givre :
i. on impose une circulation de fluide réfrigérant dans la première branche (11), dans la troisième branche (13), dans le moyen de mise en communication (36) de la troisième branche (13) avec la deuxième branche (12), et dans la deuxième branche (12),
d) en l'absence de givre, on détermine la température du flux d'air intérieur (4),
e) si la température du flux d'air intérieur (4) est au dessus d'une température seuil, on impose une circulation de fluide réfrigérant dans la première branche (11) et dans la deuxième branche (12),
i. si une puissance délivrée par le circuit est inférieure à un seuil bas de puissance, on impose une circulation de fluide réfrigérant dans la première branche (11) et simultanément dans la deuxième et la troisième branche (12, 13),
f) si la température du flux d'air intérieur (4) est en dessous de la température seuil, on impose une circulation de fluide réfrigérant dans la première branche (11) et dans la troisième branche (13).

9. Procédé selon la revendication 8, où le boîtier (45) comprend un dispositif d'entrée d'air contrôlant la quantité d'air extérieur à l'habitacle et/ou la quantité en provenance de l'habitacle admis dans le boîtier (45), dans lequel :
- en présence de givre, on positionne le dispositif d'entrée d'air de sorte que l'air admis dans le boîtier (45) soit constitué d'au moins 80% d'air en provenance de l'habitacle,
- si la puissance délivrée par le circuit est au dessus d'un seuil haut de puissance, on positionne le dispositif d'entrée d'air de sorte que l'air admis dans le boîtier (45) soit constitué majoritairement d'air en provenance de l'extérieur de l'habitacle,
- si la puissance délivrée par le circuit est inférieure au seuil bas de puissance, on positionne le dispositif d'entrée d'air de sorte que l'air admis dans le boîtier soit constitué intégralement d'air en provenance de l'habitacle,
- si la température du flux d'air intérieur (4) est en dessous de la température seuil, on positionne le dispositif d'entrée d'air de sorte que l'air admis dans le boîtier soit constitué intégralement d'air en provenance de l'habitacle.

10. Procédé selon la revendication 9, au cours duquel on positionne le dispositif d'entrée d'air en fonction d'une information de qualité du flux d'air intérieur (4).

11. Procédé selon les revendications 9 et 10, comprenant une étape de comparaison des positions du dispositif d'entrée d'air et une étape où on impose la position où la quantité d'air extérieur est la plus importante.

## Patentansprüche

1. Kältemittelkreislauf (1) zum thermischen Konditionieren eines Innenraums eines Fahrzeugs, umfassend:
- einen ersten Zweig (11), in welchem wenigstens ein Kompressor (2) und ein innerer Wärmetauscher (3) in Reihe geschaltet sind, der dafür ausgelegt ist, einen Wärmeaustausch zwischen dem Kältemittel und einem Luftstrom, innerer Luftstrom (4) genannt, sicherzustellen, der dazu bestimmt ist, in den Innenraum geleitet zu werden,
- einen zweiten Zweig (12), in welchem wenigstens ein erstes Steuerungsmittel (14) für die Zirkulation des Kältemittels in dem zweiten Zweig (12), ein erstes Expansionsorgan (15) und ein Verdampfer (16) in Reihe geschaltet sind,
- einen dritten Zweig (13), in welchem wenigstens ein zweites Expansionsorgan (27) und ein äußerer Wärmetauscher (28) in Reihe geschaltet sind, der dafür ausgelegt ist, einen Wärmeaustausch zwischen dem Kältemittel und einem Luftstrom, äußerer Luftstrom (44) genannt, sicherzustellen, der außerhalb des Innenraums angeordnet ist,
- wobei der erste Zweig (11) mit dem zweiten Zweig (12) und dem dritten Zweig (13) in Reihe angeordnet ist, wobei der zweite Zweig (12) zu dem dritten Zweig (13) parallel angeordnet ist,
- ein Mittel zur Herstellung einer Verbindung (36) des dritten Zweigs (13) mit dem zweiten Zweig (12), wobei das Mittel zwischen einem Sektor (37) des dritten Zweigs (13), der sich stromabwärts des äußeren Wärmetauschers (28) befindet, und einem Abschnitt (38) des zweiten Zweigs (12), der sich stromaufwärts des ersten Expansionsorgans (15) befindet, installiert ist,
**dadurch gekennzeichnet, dass** der Kreislauf (1) dafür ausgelegt ist, in einem Heizmodus zu arbeiten, in dem eine durch den äußeren Wärmetauscher (28) absorbierte Wärmemenge durch den inneren Wärmetauscher (3) in den inneren Luftstrom (4) abgegeben wird, in einem Kühlmodus, in dem eine durch den inneren Wärmetauscher (3) absorbierte Wärmemenge durch den äußeren Wärmetauscher (28) in den äußeren Luftstrom (44) abgegeben wird, und in mindestens drei Entfeuchtungsmodi, welche den Heizmodus und den Kühlmodus kombinieren, und wobei ein Kältemittel in derselben Richtung zirkuliert, gleichgültig, welcher Modus vorliegt.

2. Kreislauf nach Anspruch 1, wobei das Mittel zur Herstellung einer Verbindung (36) von wenigstens einem Organ zur Verwaltung (39) der Zirkulation des Kältemittels in dem Sektor (37) oder in einer Leitung (40), die zwischen dem Sektor (37) und dem Abschnitt (38) installiert ist, gebildet wird.

3. Kreislauf nach Anspruch 2, wobei die Leitung (40) an den zweiten Zweig (12) zwischen dem ersten Steuerungsmittel (14) und dem ersten Expansionsorgan (15) angeschlossen ist.

4. Kreislauf nach einem der vorhergehenden Ansprüche, wobei der dritte Zweig (13) ein zweites Steuerungsmittel (24) für die Zirkulation des Kältemittels in dem dritten Zweig (13) umfasst.

5. Kreislauf nach Anspruch 4, wobei das zweite Steuerungsmittel (24) stromaufwärts des zweiten Expansionsorgans (27) installiert ist.

6. Kreislauf nach einem der vorhergehenden Ansprüche, wobei der dritte Zweig (13) ein Bypassventil (32) zur Umgehung des zweiten Expansionsorgans (27) umfasst.

7. Kreislauf nach einem der vorhergehenden Ansprüche, welcher Mittel (14, 24, 39, 40) umfasst, die dafür ausgelegt sind, in Entfeuchtungsmodi:
- eine Zirkulation von Kältemittel im ersten Zweig (11) und im dritten Zweig (13) zu bewirken,
- eine Zirkulation von Kältemittel im ersten Zweig (11), im dritten Zweig (13), im Mittel zur Herstellung einer Verbindung (36) des dritten Zweigs (13) mit dem zweiten Zweig (12) und im zweiten Zweig (12) zu bewirken,
- eine Zirkulation von Kältemittel im ersten Zweig (11) und im zweiten Zweig (12) zu bewirken,
- eine Zirkulation von Kältemittel im ersten Zweig (11) und gleichzeitig im zweiten und im dritten Zweig (12, 13) zu bewirken.

8. Verfahren zur Steuerung eines Systems zur thermischen Konditionierung eines in einen Innenraum eines Fahrzeugs geleiteten inneren Luftstroms (4), welches einen Kreislauf nach einem der vorhergehenden Ansprüche und ein Gehäuse (45), in welchem der innere Luftstrom (4) zirkuliert und das den inneren Wärmetauscher (3) und den Verdampfer (16) enthält, umfasst, wobei:
a) der Kreislauf aktiviert wird,
b) das Vorhandensein von Reif auf dem äußeren Wärmetauscher (28) bestimmt wird,
c) bei Vorhandensein von Reif:
i. eine Zirkulation von Kältemittel im ersten Zweig (11), im dritten Zweig (13), im Mittel zur Herstellung einer Verbindung (36) des dritten Zweigs (13) mit dem zweiten Zweig (12) und im zweiten Zweig (12) bewirkt wird,
d) bei Nichtvorhandensein von Reif die Temperatur des inneren Luftstroms (4) bestimmt wird,
e) falls die Temperatur des inneren Luftstroms (4) über einem Temperaturschwellenwert liegt, eine Zirkulation von Kältemittel im ersten Zweig (11) und im zweiten Zweig (12) bewirkt wird,
i. falls eine von dem Kreislauf gelieferte Leistung niedriger als ein unterer Leistungsschwellenwert ist, eine Zirkulation von Kältemittel im ersten Zweig (11) und gleichzeitig im zweiten und im dritten Zweig (12, 13) bewirkt wird,
f) falls die Temperatur des inneren Luftstroms (4) unter dem Temperaturschwellenwert liegt, eine Zirkulation von Kältemittel im ersten Zweig (11) und im dritten Zweig (13) bewirkt wird.

9. Verfahren nach Anspruch 8, wobei das Gehäuse (45) eine Lufteintrittsvorrichtung umfasst, welche die Luftmenge außerhalb des Innenraums und/oder die aus dem Innenraum kommende Menge, die in das Gehäuse (45) eingelassen wird, steuert, wobei:
- bei Vorhandensein von Reif die Lufteintrittsvorrichtung so positioniert wird, dass die in das Gehäuse (45) eingelassene Luft zu wenigstens 80 % aus Luft besteht, die aus dem Innenraum kommt,
- falls die von dem Kreislauf gelieferte Leistung über einem oberen Leistungsschwellenwert liegt, die Lufteintrittsvorrichtung so positioniert wird, dass die in das Gehäuse (45) eingelassene Luft hauptsächlich aus von außerhalb des Innenraums kommender Luft besteht,
- falls die von dem Kreislauf gelieferte Leistung niedriger als der untere Leistungsschwellenwert ist, die Lufteintrittsvorrichtung so positioniert wird, dass die in das Gehäuse eingelassene Luft vollständig aus Luft besteht, die aus dem Innenraum kommt,
- falls die Temperatur des inneren Luftstroms (4) unter dem Temperaturschwellenwert liegt, die Lufteintrittsvorrichtung so positioniert wird, dass die in das Gehäuse eingelassene Luft vollständig aus Luft besteht, die aus dem Innenraum kommt.

10. Verfahren nach Anspruch 9, bei dem die Lufteintrittsvorrichtung in Abhängigkeit von einer Information über die Qualität des inneren Luftstroms (4) positioniert wird.

11. Verfahren nach den Ansprüchen 9 und 10, welches einen Schritt des Vergleichs der Positionen der Lufteintrittsvorrichtung und einen Schritt, in dem die Position herbeigeführt wird, bei der die Menge an äußerer Luft am größten ist, umfasst.

## Claims

1. Refrigerant fluid circuit (1) for thermally conditioning a cabin of a vehicle, comprising:
- a first branch (11) in which are installed in series at least one compressor (2) and an interior exchanger (3) designed to ensure thermal exchange between the refrigerant fluid and an air stream, termed the interior air stream (4), intended to be dispatched into the cabin,
- a second branch (12) in which are installed in series at least one first means of control (14) of the circulation of the refrigerant fluid in said second branch (12), a first expansion member (15) and an evaporator (16),
- a third branch (13) in which are installed in series at least one second expansion member (27) and an exterior exchanger (28) designed to ensure thermal exchange between the refrigerant fluid and an air stream, termed the exterior air stream (44), arranged outside the cabin,
- said first branch (11) being in series with the second branch (12) and the third branch (13), said second branch (12) being in parallel with said third branch (13),
- a means (36) for placing the third branch (13) in communication with the second branch (12), said means being installed between a sector (37) of the third branch (13) situated downstream of the exterior exchanger (28) and a portion (38) of the second branch (12) situated upstream of the first expansion member (15), **characterized in that** the circuit (1) is designed to operate according to a mode of heating where a quantity of heat absorbed by the exterior exchanger (28) is dissipated in the interior air stream (4) by the interior exchanger (3), according to a mode of cooling where a quantity of heat absorbed by the interior exchanger (3) is dissipated in the exterior air stream (44) by the exterior exchanger (28), and according to at least three modes of dehumidification which combine the mode of heating and the mode of cooling, and in which a refrigerant fluid circulates in the same direction whatever the mode.

2. Circuit according to Claim 1, in which the means (36) for placing in communication is formed by at least one member (39) for managing the circulation of the refrigerant fluid in the sector (37) or in a conduit (40) installed between the sector (37) and the portion (38).

3. Circuit according to Claim 2, in which the conduit (40) is hooked up to the second branch (12) between the first control means (14) and the first expansion member (15).

4. Circuit according to any one of the preceding claims, in which the third branch (13) comprises a second means (24) for controlling the circulation of refrigerant fluid in said third branch (13).

5. Circuit according to Claim 4, in which the second control means (24) is installed upstream of the second expansion member (27).

6. Circuit according to any one of the preceding claims, in which the third branch (13) comprises a bypass valve (32) of the second expansion member (27).

7. Circuit according to any one of the preceding claims, comprising means (14, 24, 39, 40) which, in modes of dehumidification, are designed to:
- impose a circulation of refrigerant fluid in the first branch (11) and in the third branch (13),
- impose a circulation of refrigerant fluid in the first branch (11), in the third branch (13), in the means (36) for placing the third branch (13) in communication with the second branch (12), and in the second branch (12),
- impose a circulation of refrigerant fluid in the first branch (11) and in the second branch (12),
- impose a circulation of refrigerant fluid in the first branch (11) and simultaneously in the second and the third branch (12, 13).

8. Method of controlling a thermal system for conditioning an interior air stream (4) dispatched into a cabin of a vehicle comprising a circuit according to any one of the preceding claims and a housing (45) in which said interior air stream (4) circulates, and containing the interior exchanger (3), the evaporator (16), in which:
a) the circuit is activated,
b) the presence of ice on the exterior exchanger (28) is determined,
c) in the presence of ice:
i. a circulation of refrigerant fluid is imposed in the first branch (11), in the third branch (13), in the means (36) for placing the third branch (13) in communication with the second branch (12), and in the second branch (12),
d) in the absence of ice, the temperature of the interior air stream (4) is determined,
e) if the temperature of the interior air stream (4) is above a threshold temperature, a circulation of refrigerant fluid is imposed in the first branch (11) and in the second branch (12),
i. if a power delivered by the circuit is less than a low power threshold, a circulation of refrigerant fluid is imposed in the first branch (11) and simultaneously in the second and the third branch (12, 13),
f) if the temperature of the interior air stream (4) is below the threshold temperature, a circulation of refrigerant fluid is imposed in the first branch (11) and in the third branch (13).

9. Method according to Claim 8, where the housing (45) comprises an air inlet device controlling the quantity of air outside the cabin and/or the quantity originating from the cabin admitted into the housing (45), in which:
- in the presence of ice, the air inlet device is positioned so that the air admitted into the housing (45) consists of at least 80% of air originating from the cabin,
- if the power delivered by the circuit is above a high power threshold, the air inlet device is positioned so that the air admitted into the housing (45) consists predominantly of air originating from outside the cabin,
- if the power delivered by the circuit is less than the low power threshold, the air inlet device is positioned so that the air admitted into the housing consists wholly of air originating from the cabin,
- if the temperature of the interior air stream (4) is below the threshold temperature, the air inlet device is positioned so that the air admitted into the housing consists wholly of air originating from the cabin.

10. Method according to Claim 9, in the course of which the air inlet device is positioned as a function of an item of information regarding quality of the interior air stream (4).

11. Method according to Claims 9 and 10, comprising a step of comparing the positions of the air inlet device and a step where the position where the quantity of exterior air is the most significant is imposed.
